# EUROPEAN PATENT SPECIFICATION

(11) **EP 0 509 000 B1**
(45) Date of publication and mention of the grant of the patent: **27.09.1995**
(21) Application number: 91900973.8
(22) Date of filing: 26.11.1990
(51) Int. Cl.: B60R 9/045

(54) **A LOAD CARRIER**
GEPÄCKTRÄGER
PORTE-CHARGE

(30) Priority: 11.12.1989 SE 8904163
(43) Date of publication of application: 21.10.1992
(73) Proprietor: Industri AB Thule, S-330 33 Hillerstorp (SE)
(72) Inventor: ARVIDSSON, Jan-Ivar, S-330 33 Hillerstorp (SE)
(74) Representative: Wallengren, Yngvar
(86) International application number: SE9000778
(87) International publication number: WO9108929

(56) References cited:
- DE-A- 2 946 533
- DE-A- 3 102 736
- DE-A- 3 641 745
- DE-A- 3 814 799

## Description

### TECHNICAL FIELD

The present invention relates to a load carrier which is intended for vehicular use and which comprises two longitudinal load supports, so-called rails, permanently fixed on the vehicle roof and between which transverse load supports may be disposed.

### BACKGROUND ART

Load carriers of the above-mentioned type are becoming progressively more common, in particular on estate cars, station wagons and the like. Such load carriers afford advantages in that they are permanently mounted on the vehicle roof, whereby those problems which are associated with mounting of special load struts with support feet to the side edge areas of the vehicle roof will be avoided.

However, load carriers of this type also suffer from disadvantages in that they are exclusively longitudinal. Hereby, for employing conventional roof load carrying equipment such as ski boxes, bicycle racks, ski racks, load baskets and the like, use must as a rule be made of separate, transverse load supports which are secured to the longitudinal load supports or rails in some manner. Since the appearance of prior art load carriers of the type under consideration here has varied considerably from car model to car model, it is difficult to provide a universally applicable accessory system, since at least the transverse load supports must be specifically adapted to suit the car model in question and the longitudinal load supports mounted thereon.

Further disadvantages reside in the fact that the detachable transverse load supports require the same type of handling as conventional load struts, for which reason they are often not to hand when a load is to be carried on the roof.

Further disadvantages reside in the fact that the detachable transverse load supports require the same type of handling as conventional load struts, for which reason they are often not to hand when a load is to be carried on the roof.

DE-A-3 814 799 discloses a load carrier according to the features as defined in the preamble of claim 1. Such load carrier has two longitudinal load supports fixed to the vehicle roof. The supports have, at their sides facing one another, recesses into which transverse load supports are pivotable, at least partly. At opposing edges at the recesses the longitudinal load supports have lugs for receiving pivot pins about which the transverse load supports are pivotable. The transverse load supports are either foldable or telescopic to reduce their effective length when pivoted into the recesses.

Due to the provision of the lugs as integral parts of the longitudinal load supports it is not possible to adjust the positions of the transverse load supports in the longitudinal direction of the vehicle. Further, the load carrying capacity of the transverse load supports is inadequate due to their complex design.

### PROBLEM STRUCTURE

The object of the present invention is to design a load carrier of the type disclosed by way of introduction in such a manner that the above-considered drawbacks are obviated. In particular, the present invention has for its object to devise a load carrier which in itself includes the transverse load supports. The present invention further has for its object to devise a load carrier which is aesthetically attractive and which permits large load capacity, simple switching to the load carrying position and no risk that detachable details may get lost. Finally, the present invention further has for its object to devise a load carrier which permits use of conventional roof load carrying equipment without specific modification thereof.

### SOLUTION

The objects of the invention are solved by the subject-matter of claim 1.

By arranging, in this manner, the transverse load supports connected to the longitudinal load supports and outwardly pivotal therefrom, major aesthetic advantages will be gained, and the considerable practical advantage that separate storage of detachable parts no longer need be necessary.

As further results of these features, advantages will be gained primarily in that tolerances in the vehicle body and in the mounting positions for the longitudinal load supports may readily be compensated for. Furthermore, it is not necessary to place the longitudinal load supports exactly parallel to one another, which may be an advantage on certain vehicle body types.

### BRIEF DESCRIPTION OF THE ACCOMPANYING DRAWINGS

The nature of the present invention and its aspects will be more readily understood from the following brief description of the accompanying Drawings, and discussion relating thereto.

In the accompanying Drawings:
- Fig. 1: is a side elevation of an estate car fitted with a load carrier according to the present invention;
- Fig. 2: is a top plan view of the load carrier of Fig. 1;
- Fig. 3: is a vertical section, transversely in relation to the vehicle, through the one longitudinal load support according to Fig. 1;
- Fig. 4: shows a section corresponding to Fig. 3 through one practical embodiment of both the longitudinal load support and the transverse load support;
- Fig. 5: shows a connection region for pivotal connection between one longitudinal load support and one transverse load support;
- Fig. 6: shows a locking region for fixedly locking the free end of a transverse load support in a longitudinal load support;
- Fig. 7: shows a modified embodiment of the present invention in a view corresponding to that of Fig. 3; and
- Fig. 8: shows yet a further modified embodiment of the present invention, seen from the side.

### DESCRIPTION OF PREFERRED EMBODIMENT

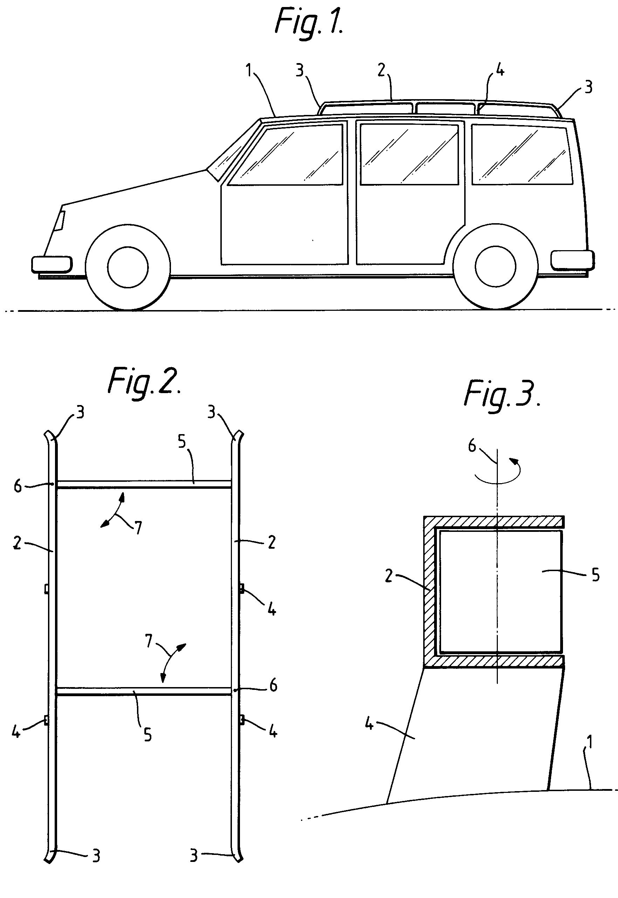

Reference numeral 1 in Fig. 1 relates to a vehicle roof which ideally is the roof of an estate car. On this roof, there are permanently mounted two longitudinal load supports 2 approximately parallel to one another which, at their forward and rear ends, are provided with feet 3 by means of which they are secured in the roof. The longitudinal load supports 2 may further be provided with one or more intermediate feet 4.

Fig. 2 is a top plan view of the load carrier of Fig. 1, and it will be apparent from this Figure that both of the longitudinal load supports 2 are, in this embodiment, placed parallel with one another. However, depending upon the design of the roof 1, the longitudinal load supports 2 may also be placed with different distances therebetween at their forward and rear ends.

At suitable positions along the longitudinal load supports, there are provided transverse load supports 5 which, with their first end, are pivotally connected by the intermediary of joints (pivots) 6 to the longitudinal load supports 2 as shown by the arrows 7. In this instance, the transverse load supports 5 have free second ends which are securable in the opposing longitudinal load support 2.

It will further be apparent from Fig. 2 that the transverse load supports 5 are interconnected each with one of the longitudinal load supports 2 so that, thereby, the transverse load supports 5 are pivotal in opposing directions past one another. Naturally, they may also be secured in the same longitudinal load support 2.

Fig. 3 shows a substantially vertical section, transversely of the longitudinal direction of the vehicle, through one longitudinal load support 2, and the Figure also shows one of the intermediate feet 4 thereof which secure the load support the vehicle roof 1. The broken line 6 illustrates the joint (pivot) axis in that direction with which the transverse load support 5 is pivotal between an inoperative position folded in to the longitudinal load support 2 and an operative, load carrying position where it extends between the longitudinal load supports as shown in Fig. 2.

In order that pivoting of the transverse load supports 5 can take place as illustrated in Fig. 2 between the outwardly pivoted operative positions and the folded-in positions along or interiorly within the longitudinal load supports 2, it is merely necessary according to the present invention that the distance between the joint axes 6 in the longitudinal direction of the vehicle is slightly larger than the length of the transverse load support 5. Hence, according to the invention, the transverse load supports 5 may hereby be placed in the longitudinal direction in any optional position along both of the longitudinal load supports.

It will be apparent from the above disclosure that the free ends 9 on the transverse and pivotal load supports 5 must be able to pass one another on pivoting in accordance with the arrows 7. This is achieved according to the invention in that those joints 6 by means of which the transverse load supports 5 are secured in the longitudinal load supports are designed so as to permit a certain vertical displacement of the free ends, such that, hereby, these can be pivoted past one another by following pivotal paths which are located at different vertical positions.

In Fig. 3, the longitudinal load support 2 has been illustrated as having a square-edged, approximately U-shaped cross section. This cross section may occur throughout the entire length of the longitudinal load support, but may also occur only along that part of the longitudinal load support in which the transverse load support is to be accommodated on inward pivoting thereof to its inoperative position. Hereby, the longitudinal load support has at least certain profiled portions with laterally open cross section which may wholly or partly accommodate the transverse load supports 5. Remaining portions of the longitudinal load support may have closed cross section whereby mechanical strength properties are improved.

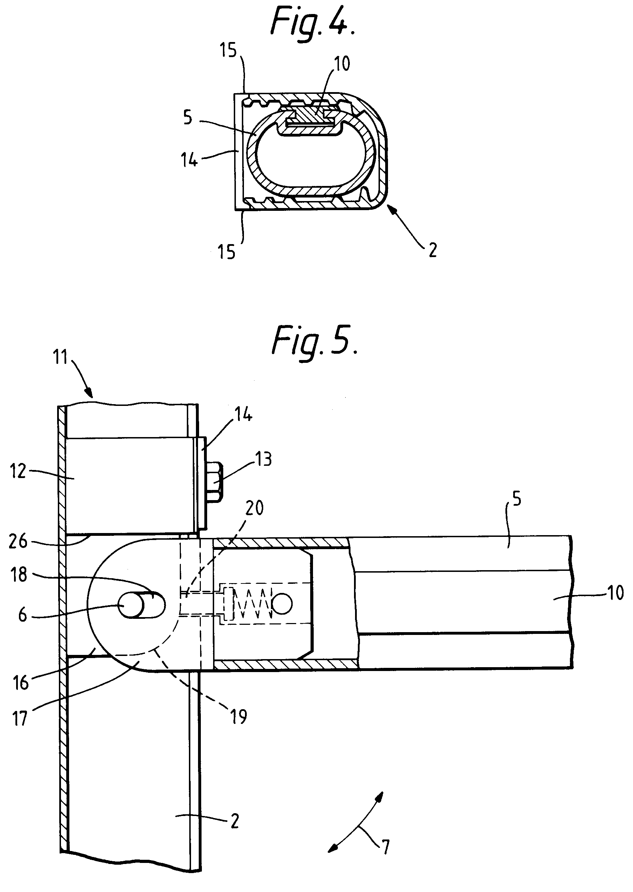

Fig. 4 shows one example of a slightly modified cross sectional configuration for the longitudinal load support 2. It will be apparent from this Figure that the cross section is, in principle, the same as in Fig. 3, apart from the fact that the corner regions are rounded-off so that the cross sectional configuration will be approximately U- or C-shaped. Furthermore, there are provided,interiorly in the profile of the longitudinal load support, vertically directed rigidifying ribs which increase mechanical strength in the vertical direction.

It will further be apparent from Fig. 4 that the transverse load support 5 has a generally oval cross section and that it has, in its upper face, an undercut groove with a longitudinal plastic strip 10 which is intended to prevent squeak and scratching of the transverse load support, or alternatively a load carried thereon.

Fig. 5 shows how a pivotal connection can be realised between a longitudinal load support 2 and a transverse load support 5 with the design illustrated in Fig. 4. It will be apparent from this Figure that, interiorly within the longitudinal load support 2, there is provided a joint (pivot) member 11 whose upper portion, designated 12, is designed with its outer configuration to be complementary to the inner configuration of the longitudinal load support 2. Hereby, the upper portion 12 of the joint member 11 may, with tight fit, be shifted interiorly in the longitudinal direction of the longitudinal load support. For positionally fixing the joint member 11 in the longitudinal load support, use is made of a screw 13 which engages with the upper portion of the joint member 11. The screw extends through a locking washer 14 which, at its upper and lower edges, is provided with inwardly directed portions 15 which grasp about the outside of the free shanks on the longitudinal load support 2. By tightening of the screw 13, the locking washer is urged against the longitudinal load support at the same time as the joint member 11 strives to displace itself laterally and, by friction with the rigidifying ribs interiorly in the load support, is positionally fixed therein.

In Fig. 5, the joint member 11 has a downwardly directed anchorage portion 16 on whose both sides extend anchorage lugs 17 which protrude out from the end of the transverse load support 5 in order thereby to grasp about both sides of the anchorage portion 16. A pivot pin, or stub shaft, extends through both the anchorage lugs 17 and the anchorage portion 16 and may run in oblong holes 18 in both of the anchorage lugs 17. Hereby, a certain displacement (within the longitudinal extent of the oblong hole) may be effected of the transverse load support 5 in its longitudinal direction in relation to the longitudinal load support.

In order to permit the above-mentioned possibility of pivoting in different vertical planes of the transverse load supports 5, i.e. such that the free end of the transverse load support 5 in Fig. 2 moves at right angles to the plane of the Drawing, the thickness of the anchorage portion 16 is suitably less than the distance in between the two anchorage lugs 17. This dimensioning, in combination with the oblong holes 18, provides such pivotal possibility.

It will further be apparent from the Drawing that the anchorage portion 16 has a curve 19 against which a spring-biased pin 20 abuts, whereby the transverse load support 5 strives to be displaced to the right in Fig. 5, i.e. away from the stub shaft 6.

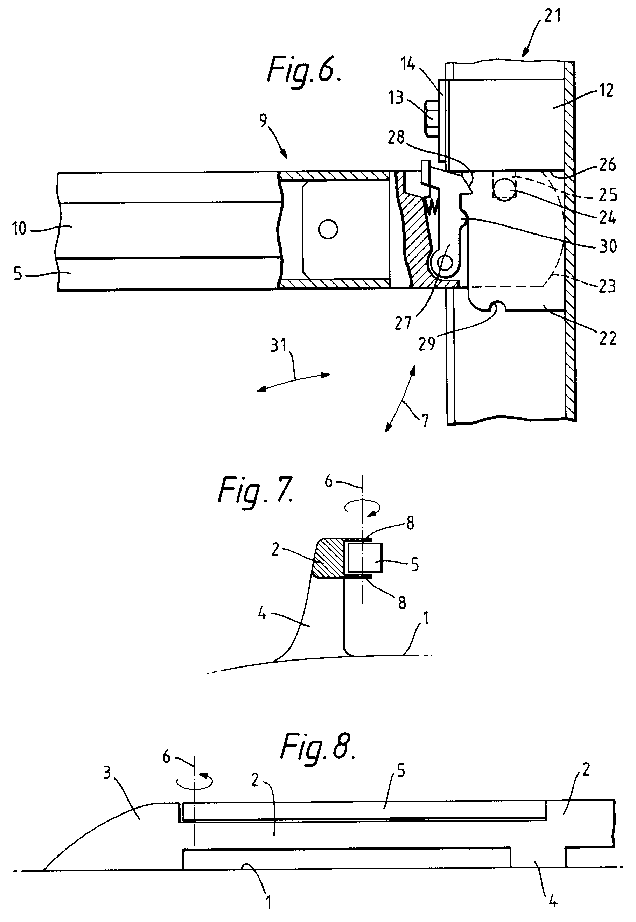

Fig. 6 shows how the free end 9 of the transverse load support 5 may be brought into securement in the opposing longitudinal load support 2. For this purpose, the longitudinal load support is provided with a locking portion 21 located interiorly in the longitudinal load support, this locking portion, like the joint member 11, having an upper portion 12 by means of which the locking portion is securable at any optional length position along the longitudinal load support. This feature is realised in a corresponding manner by means of a screw 13 and a locking washer 14.

The locking portion 21 is provided, in Fig. 6, with a downwardly directed locking member 22 which is designed in analogy with the anchorage portion 16. On both sides of this locking member 22, the pivotal load support 5 is provided with lock lugs 23 which are intimated by broken lines in the Figure. At an upper portion in Fig. 6 of the locking member 22, there is disposed a crosspin 24 which, in the illustrated position, is accommodated in recesses 25 in the two lock lugs 23. The pin 24 and the recesses 25 are placed in such a manner that, when the pin is accommodated in the recesses, the ends of the lock lugs 23 will substantially abut against the inside of the longitudinal load support. By cooperation between the ends of the lock Jugs 23 and the load support proper and by cooperation between the pin 24 and the recesses 25, the pivotal load support 5 is positionally fixed in its longitudinal direction.

In order, in the outwardly pivoted operative load carrying position, to positionally fix the transverse load support 5 against forward displacement in the direction of travel of the vehicle - and also in such situations when extreme forces act on the support, for example in the event of emergency braking or a near-accident, both of the upper portions 12 on the joint member 11 and the locking portion 21, respectively, are provided with abutment surfaces 26 against which the leading vertical edges of the anchorage lugs 17 and the lock lugs 23, respectively, may abut.

For fixedly locking the pivotal load support 5 in the position illustrated in Fig. 6, use is made of a spring-biased pawl 27 which snaps into a recess 28 in the side edge of the locking member 22 facing in towards the centre line of the vehicle.

Fig. 6 further illustrates that the locking member 22 is provided, in its downwardly facing edge on the Drawing (the rear edge on the vehicle), with a recess 29 which serves to accommodate a projection 30 on the pawl 27 on the pivotal load support which is secured in the same longitudinal load support 2 as the pertinent locking portion 21 when the pivotal load support is pivoted in to the longitudinal load support as intimated by the arrow 31. In such instance, the inwardly pivoted load support will be reliably retained in position because of the spring pretensioning which is generated away from the stub shaft 6 (see Fig. 5).

### DESCRIPTION OF ALTERNATIVE EMBODIMENTS

Fig. 7 is a section corresponding to Fig. 3. It will be apparent from this Figure that the longitudinal load support 2 is provided with a portion with a closed, possibly solid, cross section from which shanks 8 laterally extend in towards the centre line of the vehicle and accommodate between themselves the pivotal load support 5 when this is pivoted in to is inoperative position. The broken line 6 also intimates in this Figure the pivotal axis for securing the pivotal load support 5 in the longitudinal load support 2.

Fig. 8 shows a variant in which the pivotal load support 5 is placed on the upper side of the longitudinal load support 2 and in an upwardly open recess therein. The pivotal axis for the pivotal load support is also intimated here by the broken line 6.

By way of yet a further embodiment, mention might be made that the longitudinal load support 2 may be generally hollow in order to accommodate in itself storage spaces for the transverse load supports 5 which, in this embodiment, do not need any permanent pivotal fixture in the longitudinal load supports.

In a supplementation of the above-described load carrier, this may be provided with flip-up cargo shift guards which are pivotal about shafts approximately parallel with the longitudinal direction of the longitudinal load supports 2. The cargo shift guards are, in such instance, pivotal about pivot shafts which are preferably located parallel with the lower shank in the profile of the longitudinal load support. Hereby, the cargo shift guard will, in its raised position, enter into abutment against the upper shank in the longitudinal load support in order thereby to be locked in a projecting position approximately vertically above the longitudinal load support. Ideally, the cargo shift guard is placed in register with the feet 3 and 4 of the load carrier and possibly recessed in the insides thereof in the downwardly pivoted inoperative position. Securement of these pivotal cargo shift guards is suitably realised by means of anchorage bodies which are designed in a manner wholly in analogy with the joint members 11 and the locking portions 21.

The present invention should not be considered as restricted to that described above and shown on the Drawings, many modifications being conceivable without departing from scope of the appended Claims.

## Claims

1. Load carrier for vehicles comprising two longitudinal load supports (2) fixed to the vehicle roof (1) and having recesses being open towards one another, transverse load supports (5) each having a first end pivotably connected to one of the longitudinal load supports (2) and being pivotable between a position completely or partly received in the recess and an extended position in which they extend between the longitudinal load supports (2), the transverse load supports (5) each having a free second end (9) secured in the opposing longitudinal load support (2), pivot members (11) provided inside the recess of the longitudinal load supports (2) for pivotal connection of the transverse load supports (5) and locking members (21) for locking the transverse load supports (5), **characterized** in that the pivot members (11) and the locking members (21) have portions (12) with an external shape being complementary to the internal shape of the recesses and means (13,14) for fixing the pivot members (11) and locking members (21) at different longitudinal positions in the recesses, and in that said pivotal connection between the longitudinal (2) and the transverse (5) load supports is arranged to allow a certain displacement of the transverse load supports (5) in the longitudinal directions thereof in relation to that longitudinal load support (2) to which it is connected and that the free second ends (9) of the transverse load supports (5) and the locking members (21) in the opposed longitudinal load support (2) have means (27, 28) for positionally fixing said free second ends (9).

2. The load carrier of claim 1, **characterized** in that said longitudinal load supports (2) have longitudinally extending ribs in the recesses thereof.

3. The load carrier of claim 1 or 2, **characterized** in that said pivot members (11) and said locking members (21) have abutment surfaces (26) located in front of the transverse load supports (5) as seen in the direction of travel of the vehicle.

4. The load carrier of any of claims 1-3, **characterized** in that said pivot member (11) has an anchorage portion (16) for a pivot pin (6), said transverse load support (5) has at one end thereof an anchorage lug (17) at either side of said anchorage portion (16), said lugs (17) have oblong holes (18) extending in the longitudinal direction of the transverse load support (5) for receiving the pivot pin, and that said transverse load support (5) has a displacable pin (20) abutting, under spring bias, the curved (19) edge of the anchorage portion (16) thereby to urge the transverse load support (5) away from the anchorage portion (11).

## Patentansprüche

1. Lastenträger für Fahrzeuge, der aufweist:
zwei sich in Längsrichtung erstreckende Lastenstützen (2), die an dem Fahrzeugdach (1) befestigt sind und Aussparungen, die in Richtung aufeinander zu offen sind, aufweisen,
quer verlaufende Lastenstützen (5), deren jeweils erstes Ende schwenkbar mit einer der sich in Längsrichtung erstreckenden Lastenstützen (2) verbunden ist und die zwischen einer Position, in der sie ganz oder teilweise in der Aussparung aufgenommen sind und einer ausgefahrenen Position, in der sie sich zwischen den sich in Längsrichtung erstreckenden Lastenstützen (2) erstrecken, schwenkbar sind, wobei die quer verlaufenden Lastenstützen (5) jeweils ein freies zweites Ende (9), das in der gegenüberliegenden sich in Längsrichtung erstreckenden Lastenstütze (2) befestigt ist, Schwenkelemente (11), die in der Aussparung der sich in Längsrichtung erstreckenden Lastenstütze (2) für eine Schwenkverbindung der quer verlaufenden Lastenstützen (5) vorgesehen sind, und Verriegelungselemente (21) zum Verriegeln der quer verlaufenden Lastenstützen (15) aufweisen, dadurch gekennzeichnet, daß die Schwenkelemente (11) und die Verriegelungselemente (21) Abschnitte (12), deren äußere Form komplementär zur inneren Form der Aussparungen ist, und eine Einrichtung (13, 14) zum Fixieren der Schwenkelemente (11) und der Verriegelungselemente (21) an in Längsrichtung unterschiedlichen Positionen in den Aussparungen, aufweisen, und daß die Schwenkverbindung zwischen den sich in Längsrichtung erstreckenden (2) und quer erstreckenden Lastenstützen (5) so angeordnet ist, daß eine gewisse Verschiebung der quer verlaufenden Lastenstütze (5) in deren Längsrichtungen in bezug auf diejenige sich in Längsrichtung erstreckende Lastenstütze (2), mit welcher sie verbunden ist, möglich ist, und daß die freien zweiten Enden (9) der quer verlaufenden Lastenstützen (5) und die Verriegelungselemente (21) in der gegenüberliegenden sich in Längsrichtung erstreckenden Lastenstütze (2) eine Einrichtung (27, 28) zum Positionsfixieren der freien zweiten Enden (9) aufweisen.

2. Lastenträger nach Anspruch 1, dadurch gekennzeichnet, daß die sich in Längsrichtung erstreckenden Lastenstützen (2) in ihren Aussparungen sich in Längsrichtung erstreckende Rippen aufweisen.

3. Lastenträger nach Anspruch 1 oder 2, dadurch gekennzeichnet, daß die Schwenkelemente (11) und die Verriegelungselemente (21) Anlageflächen (26) aufweisen, die vor den quer verlaufenden Lastenstützen (5), in Bewegungsrichtung des Fahrzeugs gesehen, angeordnet sind.

4. Lastenträger nach einem der Ansprüche 1 bis 3, dadurch gekennzeichnet, daß das Schwenkelement (11) einen Verankerungsabschnitt (16) für einen Schwenkzapfen (6) aufweist, wobei die quer verlaufende Lastenstütze (5) an einem ihrer Enden auf jeder Seite des Verankerungsabschnitts (16) einen Verankerungsansatz (17) aufweist, wobei die Ansätze (17) längliche Löcher (18) aufweisen, die sich in Längsrichtung der quer verlaufenden Lastenstütze (5) erstrecken, um den Schwenkzapfen aufzunehmen, und daß die quer verlaufende Lastenstütze (5) einen verschiebbaren Zapfen (20) aufweist, der unter Federvorspannung an dem gekrümmten (19) Rand des Verankerungsabschnitts (16) anliegt, und dabei die quer verlaufenden Lastenstütze (5) von dem Verankerungsabschnitt (16) wegzwingt.

## Revendications

1. Porte-charge pour véhicule comprenant deux supports longitudinaux (2) de charge fixés au toit (1) du véhicule et possédant des évidements ouverts l'un vers l'autre, des supports transversaux (5) de charge ayant chacun une première extrémité articulée à l'un des supports longitudinaux de charge (2) et pivotant entre une position complètement ou partiellement reçue dans l'évidement et une position déployée dans laquelle ils s'étendent entre les supports longitudinaux de charge (2), les supports transversaux de charge (5) ayant chacun une seconde extrémité (9), libre, fixée dans le support longitudinal de charge opposé (2), des éléments pivots (11) prévus dans l'évidement des supports longitudinaux de charge (2) pour l'articulation des supports transversaux de charge (5) et des éléments de verrouillage (21) pour verrouiller les supports transversaux de charge (5), caractérisé en ce que les éléments pivots (11) et les éléments de verrouillage (21) ont des parties (12) dont la forme extérieure est complémentaire de la forme intérieure des évidements et des moyens (13, 14) pour fixer les éléments pivots (11) et les éléments de verrouillage (21) dans des positions longitudinales différentes dans les évidements, et en ce que ladite articulation entre les supports longitudinaux de charge (2) et les supports transversaux de charge (5) est agencée pour permettre un certain mouvement des supports transversaux de charge (5) dans leurs directions longitudinales par rapport au support longitudinal de charge (2) auquel ils sont articulés et que les secondes extrémités libres (9) des supports transversaux de charge (5) et les éléments de verrouillage (21) dans le support longitudinal de charge opposé (2) ont des moyens (27, 28) pour fixer en position lesdites secondes extrémités libres (9).

2. Porte-charge selon la revendication 1, caractérisé en ce que lesdits supports longitudinaux de charge (2) ont des nervures qui s'étendent longitudinalement dans leurs évidements.

3. Porte-charge selon la revendication 1 ou 2, caractérisé en ce que lesdits éléments pivots (11) et lesdits éléments de verrouillage (21) présentent des surfaces de butée (26) situées devant les supports transversaux de charge (5) quand on les voit dans la direction de déplacement de la voiture.

4. Porte-charge selon l'une quelconque des revendications 1 à 3, caractérisé en ce que ledit élément pivot (11) possède une partie d'ancrage (16) pour une broche pivot (6), ledit support transversal de charge (5) a à une de ses extrémités une languette d'ancrage (17) de chaque côté de ladite partie d'ancrage (16), desdites languettes (17) ont des trous oblongs (18) s'étendant dans la direction longitudinale du support transversal de charge (5) pour recevoir la broche pivot, et en ce que lesdits supports transversaux de charge ont une broche déplaçable (20) venant, sous la poussée d'un ressort, en butée contre le bord courbe (19) de la partie d'ancrage (16) de manière à contraindre le support transversal de charge à l'écart de la partie d'ancrage (16).
